Europäisches Patentamt

European Patent Office

Office européen des brevets

(19)

(11) **EP 0 697 678 A1**

(12) **DEMANDE DE BREVET EUROPEEN**

(43) Date de publication:
21.02.1996 Bulletin 1996/08

(51) Int Cl.⁶: **G06T 11/40**

(21) Numéro de dépôt: 95401803.2

(22) Date de dépôt: 01.08.1995

(84) Etats contractants désignés:
DE GB IT SE

(30) Priorité: 19.08.1994 FR 9410154

(71) Demandeur: SEXTANT AVIONIQUE
F-92360 Meudon-la-Forêt (FR)

(72) Inventeurs:
• Filliatre, Eric, Thomson-CSF
F-92402 Courbevoie Cédex (FR)
• Pernia, Olivier, Thomson-CSF
F-92402 Courbevoie Cédex (FR)

(74) Mandataire: Albert, Claude et al
F-92402 COURBEVOIE CEDEX (FR)

(54) **Procédé de codage de mémoire image**

(57)     Procédé de codage des mots d'une mémoire image destinée à rafraîchir une image formée sur un écran par un ensemble de pixels, l'image comportant des surfaces ayant une couleur uniforme délimitées par un contour comportant une ligne médiane et un voisinage de la ligne médiane comportant de part et d'autre de cette ligne les pixels voisins d'un pixel de cette ligne médiane, l'image comportant en outre des tracés filaires, un pixel de l'écran étant en correspondance univoque avec une cellule mémoire contenant un mot, la lecture de la cellule en cours constituant une partie au moins de l'information d'écriture du pixel correspondant sur l'écran, procédé caractérisé en ce que les mots mémoires recodés relativement aux contours comprennent non seulement les mots mémoires relatifs aux lignes médianes, mais aussi les mots mémoires relatifs au voisinage de chaque contour et en ce que le code de chaque mot mémoire recodé comporte deux bits d'information sur les circonstances d'écriture des bits recodés ces deux bits permettant d'identifier par les combinaisons de leurs différentes valeurs possibles quatre cas ;

le premier cas, identifie un tracé filaire qui pour le pixel représenté n'est pas sur le tracé d'un contour précédemment écrit.

le second cas, identifie un tracé de contour qui pour le pixel représenté n'est pas sur le tracé d'un autre contour.

le troisième cas, identifie un tracé de contour qui pour le pixel représenté se trouve au voisinage d'un contour précédent.

le quatrième cas, identifie un tracé filaire qui pour le pixel représenté est commun à un contour précédemment tracé.

FIG. 1

## Description

L'invention est relative à un procédé de codage pour l'écriture et la lecture en temps réel de mémoires utilisées pour le rafraîchissement d'images sur des écrans, par exemple à structure matricielle, où chacun des pixels de l'écran est défini par son adresse et sa luminosité.

Dans les dispositifs connus réalisant des fonctions d'écriture et de lecture, la mémoire comporte au moins autant de cellules que l'écran comporte de pixels. La structure de cette mémoire est le reflet de celle de l'écran et une correspondance directe peut être établie entre la cellule élémentaire pour la mémoire et le pixel pour l'écran. Une cellule de la mémoire comporte des informations permettant de définir un pixel de l'écran.

La lecture régulière et permanente de la mémoire, de façon à permettre un renouvellement de l'image de l'écran, à une cadence, par exemple, de 50 images par seconde ne pose pas de problèmes particuliers, par contre l'écriture en mémoire et le renouvellement des informations contenues en mémoire présente une durée qui est liée à la complexité de l'image que l'on veut représenter et qu'il est difficile de faire tenir dans un temps limité à la période de rafraîchissement de l'image. En particulier le tracé des surfaces affecte fortement le temps nécessaire à l'élaboration du tracé.

Dans ce qui suit, pour l'art antérieur comme pour l'invention, on suppose qu'une image de l'écran peut être définie par un ensemble de surfaces se détachant sur un fond chaque surface ayant un contour, le contour délimitant une partie externe à la surface et une partie interne. La surface peut également comprendre des éléments filaires, il s'agit de surfaces longilignes pour lesquelles la dimension transverse locale se réduit à quelques pixels.

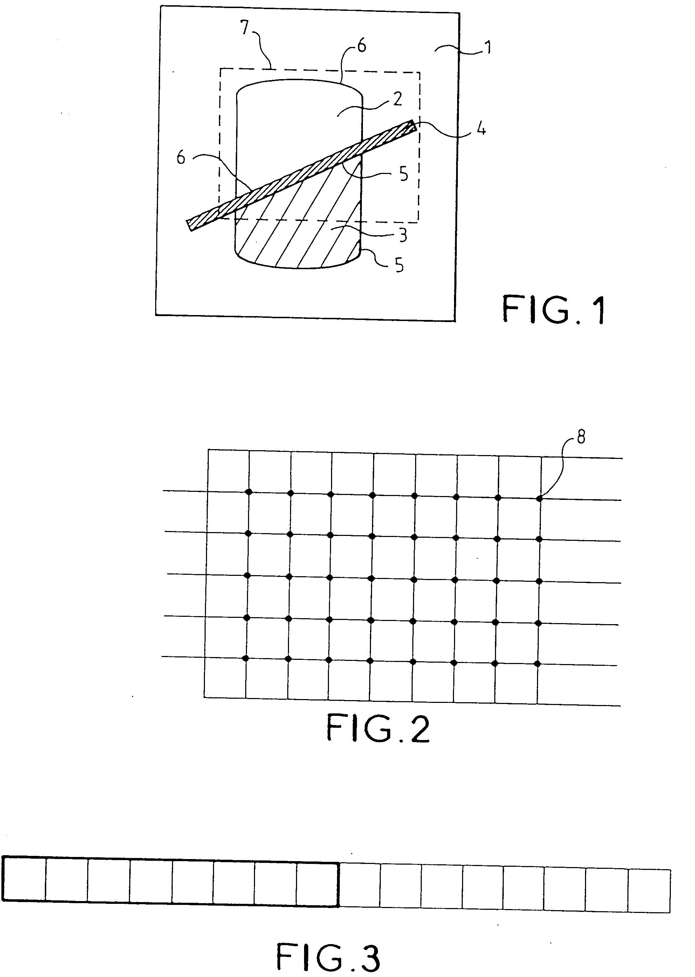

Un tel écran comportant une image simple répondant aux critères qui viennent d'être énoncés est représentée figure 1. Cette image comporte un fond 1 sur lequel se détachent deux surfaces 2 et 3 et un élément filaire 4. Les surfaces 2 et 3 sont délimitées par leurs contours respectifs 5 et 6.

Une telle image correspond à une forme simplifiée de représentation d'un horizon artificiel, la surface 3 représente la terre, la surface 2 le ciel, l'élément filaire 4 qui sépare ces deux surfaces représente la ligne d'horizon en fonction des évolutions d'un avion sur lequel est monté l'horizon artificiel. Dans ce cas simple, les surfaces 2 et 3 et leurs contours respectifs 5 et 6 existent toujours mais leurs formes et leurs surfaces peuvent varier. Dans le cas général relativement à l'invention, il en sera de même. On aura au moins localement, par exemple sur une bande horizontale de l'écran, un nombre fixe de surfaces affectées chacune d'un contour. Une surface peut éventuellement être temporairement nulle. L'image peut également comprendre en des endroits quelconques des tracés filaires correspondant par exemple à des graduations ou des inscriptions alphanumériques ou à des silhouettes.

Parmi les procédés connus pour remplir les cellules de la mémoire de tracé, une première solution consiste à balayer une enveloppe extérieure à une surface que l'on veut tracer. Une telle enveloppe extérieure est représentée pour la surface 2 par un contour 7 tel que celui représenté en pointillés. On remplit ensuite les cellules se trouvant sur les pixels qui définissent ensemble le contour 6 de la surface 2. On limite ensuite le balayage de la mémoire à la surface se trouvant à l'intérieur du contour 7. Au cours de ce balayage, par exemple horizontal, limité par le contour 7, on repère par une lecture préalable des cellules balayées, le franchissement du contour 7 et l'on inscrit dans chacune des cellules se trouvant à l'intérieur du contour 7, la luminosité, couleur ou niveau de gris, retenue pour la surface 2. Dans ce type de technique, le contour 6 de la surface 2 est généralement décomposé en deux demi contours. Ceci n'est valable que pour des formes de contour convexe, ce qui est souvent vérifié pour des surfaces de forme simple. Dans le cas d'un balayage horizontal, on considère le demi contour gauche et le demi contour droit. Ces contours ne sont pas inscrits en mémoire image, mais généralement dans des mémoires additionnelles dites mémoires masques. Ce mécanisme permet une gestion beaucoup plus simple des contours et évite tout conflit avec le contenu de la mémoire image.

Par un tel procédé on limite pour chacune des surfaces le temps du tracé au temps nécessaire pour balayer la surface se situant à l'intérieur du contour 7 qui est un contour simple que l'on aura choisi aussi proche que possible du contour 6. Le contour 7 délimitant la zone de balayage est souvent le rectangle le plus petit dans lequel le contour 6 puisse être inscrit. Le temps de réalisation de la surface 2 croît cependant linéairement avec la surface 2.

Une seconde solution connue consiste à utiliser une mémoire image additionnelle pour chacune des différentes surfaces répertoriées. Cette mémoire codée sur un bit aux valeurs 0 ou 1 comporte une valeur par exemple 0 lorsqu'on est en dehors ou dans la surface et 1 pour un pixel de franchissement du contour de la surface. La mémoire image et les mémoires additionnelles sont relues en parallèle. Une forme de réalisation d'une mémoire image et des mémoires additionnelles associées à chaque surface peut prendre la forme représentée figure 2. La figure 2 représente une partie de la mémoire image, utilisée pour le renouvellement d'une image telle que celle figurant en figure 1. Chacune des cellules 8 de cette mémoire peut contenir une information, par exemple sur huit bits, permettant de définir la couleur du pixel. Une représentation possible d'un mot mémoire d'une cellule 8 est représentée figure 3. On a supposé que le mot comportait seize bits. Les huit bits de poids fort représentent par exemple la luminosité. Les huit bits de poids faible peuvent être utilisés pour l'indication d'un franchissement de surface. On peut ainsi travailler sur huit contours de surface différents. Avec cette convention les pixels définissant le contour de la surface n° 3 sont définis par le fait que le bit n° 3 par exemple en partant de la droite est à 1. Chaque contour et sa couleur est ainsi entièrement défini.

Lors du balayage de la mémoire pour le tracé de l'image de l'écran, on détectera le franchissement du contour de la surface 3 par la détection de la valeur à 1 du troisième bit. Cela déclenchera pour le balayage de la ligne en cours, à partir de ce pixel l'affichage de la couleur affectée à la surface n° 3 et cela jusqu'à ce que l'on retrouve une valeur 1 pour la valeur du bit n° 3 ce qui indiquera que l'on sort de la surface n° 3.

Cette façon de procéder permet de traiter sans problème particulier les intersections de contour. Elle ne permet pas cependant de traiter des contours complexes ayant des formes alternativement concave et convexe car elle entraîne alors des confusions entre l'extérieur et l'intérieur de la surface. On remarque qu'avec un tel procédé, on obtient un bon niveau de performances en réduisant considérablement le temps de tracé des surfaces. En revanche, une confusion peut apparaître entre l'intérieur et l'extérieur des surfaces de forme complexe, pendant la relecture de la mémoire image. En outre, la capacité de la mémoire additionnelle qui doit être prévue pour l'inscription binaire des franchissements de contour, croît linéairement avec le nombre de surfaces ce qui engendre rapidement des coûts et un encombrement rédhibitoires.

On remarque ensuite et cette remarque est à la base de l'invention qui va être décrite, que la couleur dont le codage qui, dans l'exemple représenté figure 3, est prévu sur les huit bits de poids fort n'est pas inscrite pour les surfaces. C'est cette non inscription qui permet de gagner du temps de tracé. La couleur est fournie au moment de la lecture mémoire pour le rafraîchissement de l'image de l'écran, par un processeur de lecture. Ce processeur associe au premier franchissement de l'un des contours, par exemple le n° 3, décelé par la valeur à 1 du troisième bit à partir de la droite, la couleur interne au contour n° 3 et cesse cette association au deuxième franchissement de ce contour décelé de la même manière. C'est seulement dans le cas des tracés filaires qui représentent toujours une part importante, non pas de la surface mais de sa signification, que la couleur est indiquée sur les huit bits de poids fort. De la sorte, on mobilise une part importante de mémoire qui, à l'exception des tracés filaires, n'est pas utilisée.

La présente invention vise d'une part à diminuer le temps de tracé d'une mémoire de rafraîchissement d'une image d'un écran et d'autre part à diminuer la taille de la mémoire pour une même qualité de tracé.

Dans le mode préféré de réalisation, elle vise à obtenir de bons tracés filaires et un bon traitement des intersections de contour d'une part et des surfaces complexes d'autre part. Elle vise également à un bon lissage (en anglais anti aliasing) des transitions entre les différentes surfaces entre elles ou avec le fond et avec les éléments filaires.

A ces fins, l'invention utilise comme dans le second art antérieur décrit une méthode dans laquelle les couleurs correspondant aux tracés filaires sont inscrits et lus dans la mémoire du tracé. Pour les surfaces, on ne trace dans la mémoire et comme dans cet art antérieur que les contours des surfaces. Comme dans l'art antérieur, chaque contour est affecté d'un ordre de priorité de même que chaque tracé filaire. On trace d'abord les contours par ordre de priorité croissant puis les tracés filaires par ordre de priorité croissant également. Cet ordre de tracé permet en cas de superposition de deux ou plusieurs tracés passant par un même pixel de remplacer pour ce pixel les informations qui y sont contenues par les informations auxquelles on attache le plus d'importance.

Toutefois selon l'invention, on va utiliser pour chaque mot mémoire deux bits qui seront appelés par la suite, bits d'identification de cas. Ces deux bits permettent de réaliser quatre combinaisons de valeurs. Les inventeurs ont remarqué qu'il y a quatre cas de tracé. Pour trois de ces cas, les natures des informations données en mémoire diffèrent entre elles. Pour le quatrième, les informations sont les mêmes que dans l'un des trois autre cas mais le code de ce quatrième cas permet, comme il sera vu plus tard, de savoir que l'on se trouve dans une zone de croisement de contours qui a déjà été traitée. Le retraitement n'est donc pas autorisé en raison du risque de mauvaise interprétation. Les deux bits qui définissent le cas du tracé seront utilisés par le processeur de lecture de la mémoire pour savoir si pour le pixel en cours ou pour le pixel suivant l'information de couleur doit être lue dans la mémoire ou au contraire dans une mémoire interne au processeur de lecture.

Les quatre cas repérés par les deux bits d'identification seront maintenant explicités.

Dans le cas où l'on a affaire à un tracé de contour d'une surface, sans croisement ni intersection, on utilisera en écriture de la mémoire par exemple le code 01. Chaque fois que ce code sera rencontré à l'emplacement qui est réservé au code d'identification de cas dans la cellule mémoire, on saura que l'on est sur un pixel de contour ou voisin d'un contour et que ce contour ne présente pas à cet endroit d'intersection avec un autre contour ou avec un élément filaire. Ainsi, par exemple, tous les pixels du premier contour tracé seront au code d'identification 01. Si le second contour tracé n'a pas de point d'intersection avec le premier, les cellules mémoire correspondant aux pixels de chacun de ces deux contours et de leurs voisinages garderont le code d'identification 01.

Si le contour de rang $i$ vient à croiser un contour de rang $j$ ($j \leq i$) cela signifie qu'il existe des pixels et des voisinages de pixels communs aux deux contours $i$ et $j$. Ce fait sera détecté car lors du tracé d'un contour, avant le remplissage de la cellule mémoire, on procède systématiquement à la lecture de cette cellule mémoire. Il est rappelé à ce stade que comme dans les arts antérieurs connus, la mémoire image est remise à 0 après chaque fin de lecture de la mémoire. Le début du tracé s'effectue donc à chaque fois sur une mémoire vierge. Il est précisé également que les tracés des différents contours sont effectués successivement, les tracés de contour les plus prioritaires étant effectués en dernier. Les tracés filaires sont effectués de même après les tracés de contours et par ordre de priorité croissant, les tracés filaires les plus prioritaires étant effectués en dernier.

Si au moment du tracé du contour *i* on détecte une cellule mémoire déjà chargée, on va déclencher une lecture des cellules se trouvant sur la ligne de balayage en cours et voisines de cette cellule, cela va permettre de détecter dans ce voisinage les pixels déjà utilisés pour la description du contour *j*. Toutes les cellules mémoires de ce voisinage seront affectées du code 10. Les informations contenues dans les cellules mémoires concourant à la fois à la définition des contours *i* et *j* seront remplacées par les informations du contour *i*, puisque ce contour est prioritaire sur le contour *j*. En même temps que cet écrasement par les nouvelles informations, on remettra à 01 le code d'identification. Pour les cellules mémoire concourant à la définition de la ligne médiane du contour *j*, on inscrira sur 1 bit de la cellule mémoire dédiée à cet effet une valeur de bit par exemple à 1 qui à la lecture signifiera qu'on vient de franchir le contour *j*. Les cellules mémoire dont le code reste à 10 sont donc celles qui ont été relues à l'occasion du tracé *i* mais dont les informations n'ont pas été changées. Si cette cellule se trouve sur un nouveau contour ou un nouveau tracé filaire ultérieurement tracé, le code 10 indiquera que la séquence locale des luminosités a déjà été traitée et éventuellement écrasée par un tracé suivant. Cette information ne constitue donc plus un tout cohérent et son retraitement n'est pas autorisé en raison du risque de mauvaise interprétation. Autrement dit l'information séquentielle de franchissement de contour, inscrite à l'occasion du tracé du contour j, n'est plus intègre sur ces pixels et ne doit plus être décodée.

Les codes d'identification de cas indiquant une appartenance à un élément filaire sont 00 et 11.

Le code 00 indiquera que le pixel correspondant à une cellule mémoire ayant un code d'identification à cette valeur est seul présent sur une surface ou sur un fond. La détection de ce code en lecture de la mémoire interrompra un ordre d'affectation automatique d'une couleur à une surface et le remplacera par une couleur dont la valeur sera lue sur des bits affectés à cet effet dans la cellule mémoire.

Le code 11 indiquera que le pixel correspondant à une cellule mémoire ayant un code d'identification à cette valeur se trouve sur un contour. Ce cas sera détecté par la lecture systématique de la mémoire avant écriture. Dans ce cas, on procède comme pour l'intersection déjà décrite de deux contours. On réaffecte une partie de la cellule mémoire pour y écrire des informations de franchissement de contour. Ce faisant on occupe une partie de mémoire normalement consacrée pour un code d'identification de tracé filaire à l'inscription d'une couleur. Dans ce cas, et dans ce cas seulement, en raison de la moindre place disponible en mémoire, la couleur sera inscrite sur un mode dégradé, c'est-à-dire sur un nombre de bits réduits. Les essais effectués par le demandeur ont montré que la qualité de l'image ne s'en trouvait pas affectée.

En résumé, l'invention est donc relative à un procédé de codage des mots d'une mémoire image destinée à être lue périodiquement pour rafraîchir une image formée sur un écran par un ensemble de pixels, l'image comportant, se détachant d'un fond d'image des surfaces $S_1 .... S_2 .... S_p$ chacune de ces surfaces ayant une couleur uniforme et étant délimitée par un contour $C_1 .... C_2 ... C_p$, chaque contour comportant une ligne médiane joignant les pixels situés en limite d'au moins deux surfaces ou d'une surface et du fond, et un voisinage de la ligne médiane comportant de part et d'autre de la ligne médiane au moins des pixels immédiatement voisins d'un pixel de la ligne médiane, l'image comportant en outre des tracés filaires, un pixel de l'écran étant en correspondance univoque avec une cellule mémoire pouvant contenir un mot et la lecture de la cellule en cours constituant une partie au moins de l'information nécessaire à l'écriture du pixel correspondant sur l'écran, procédé dans lequel la mémoire image est effacée après chaque lecture et dans lequel un ordre de priorité est attribué aux contours d'une part et aux tracés filaires d'autre part, les contours étant recodés d'abord, puis les tracés filaires et pour chacune de ces natures de tracés par ordre prioritaire croissant, les plus prioritaires étant recodés en dernier, procédé caractérisé en ce que les mots mémoires recodés relativement aux contours comprennent non seulement les mots mémoires relatifs aux lignes médianes des contours mais aussi les mots mémoires relatifs au voisinage de chaque contour et en ce que le code de chaque mot mémoire recodé comporte deux bits d'identification des circonstances d'écriture des bits recodés. Ces deux bits permettent d'identifier par les combinaisons de leurs différentes valeurs possibles quatre cas;

le premier cas, repéré par une première combinaison de valeurs des deux bits, identifie un tracé filaire qui pour le pixel représenté n'est pas sur le tracé d'un contour précédemment écrit.

le second cas repéré par une seconde combinaison de la valeur des deux bits identifie un tracé de contour qui pour le pixel représenté n'est pas sur le tracé d'un autre contour.

le troisième cas repéré par une troisième combinaison de la valeur des deux bits identifie un tracé de contour qui, pour le pixel représenté, se trouve au voisinage d'un contour précédent.

le quatrième cas repéré par une quatrième combinaison de la valeur des deux bits identifie un tracé filaire qui, pour le pixel représenté, est commun à un contour précédemment tracé.

L'invention sera mieux comprise et d'autres caractéristiques apparaîtront à l'aide de la description ci-après et des dessins joints où :

- la figure 1 représente une vue d'écran avec une image simple ;

- les figures 2 et 3 représentent respectivement de manière très schématique une mémoire image associée à l'image de la figure 1 et un mot mémoire d'une cellule de cette mémoire ;

- la figure 4 est un schéma d'un processeur graphique mettant en oeuvre l'invention ;

- les figures 5 à 7 sont des diagrammes explicatifs de l'invention ;

- les figures 8 et 9 montrent une partie des pixels d'un écran pour deux types de contour ;

- les figures 10 et 11 illustrent l'interprétation sur écran lors de la lecture de séquences correspondant aux figures 8 et 9 ; et

- la figure 12 montre un exemple de codage dans un mode de réalisation selon l'invention.

Les figures 1 à 3 ont déjà été décrites ci-dessus en relation avec l'art connu et on ne reprendra donc pas cette description.

Dans le mode préféré de réalisation de l'invention, on utilise aussi pour les cas relatifs aux trois premières combinaisons mentionnées ci-dessus, un groupe de bits destiné à marquer une transition entre deux surface ou une surface et un tracé filaire. Avant d'expliquer ce que représente cette grandeur, les valeurs relatives qu'elle peut prendre et l'utilisation qui en est faite, il convient de rappeler que les mots mémoires de la mémoire image sont lus dans l'ordre selon lequel l'écran est balayé. Ainsi, dans le cas le plus courant, le balayage est un balayage en lignes, par exemple horizontales, et les mots mémoires sont lus ligne par ligne par exemple de la gauche vers la droite. Il a été introduit plus haut une notion de contour comprenant non seulement une ligne médiane qui représente stricto-sensu, une ligne dé séparation entre deux surfaces, mais aussi une zone voisine située de part et d'autre de la ligne médiane. Cette notion de voisinage sera maintenant précisée. Il convient auparavant de faire quelques rappels. L'image que l'on veut montrer sur l'écran est fournie par exemple par un générateur de symbologie. Ce générateur calcule point par point les coordonnées de chaque contour. La jonction de ces points selon une ligne lisse constitue le contour vrai. Les points ainsi calculés ne correspondent pas nécessairement aux centres des pixels de l'écran. Pour chacun des points du contour vrai, il est possible de définir la tangente au contour en ce point et la normale au contour en ce point. Pour ce contour vrai le voisinage du contour stricto-sensu est constitué par la surface engendrée par le déplacement d'un segment de longueur fixe se trouvant toujours sur la normale au contour vrai, la tangente au contour vrai étant la médiatrice de ce segment. Sur l'écran, les seuls points dont on dispose pour réaliser l'image sont les pixels. En général, on ne dispose pas de pixels alignés selon la normale au contour. Dans sa forme la plus générale, le voisinage au niveau de l'écran pourrait être défini comme étant la surface se trouvant entre deux lignes. La première ligne est la ligne joignant les pixels les plus proches des points de l'une des extrémités du segment ayant la tangente pour médiatrice et la seconde ligne joignant les pixels les plus proches de l'autre extrémité de ce segment. Les lignes de balayage de l'écran qui déterminent l'ordre de lecture des pixels peuvent être localement sécantes ou tangentes à un contour. Dans le cas où la ligne de balayage est sécante au contour, on peut distinguer deux cas. Dans le premier cas, les pixels balayés sont d'abord ceux situés à l'extérieur du contour, un pixel du contour, puis des pixels intérieurs au contour. Dans le second cas, les pixels balayés sont d'abord les pixels intérieurs au contour, les pixels du contour puis les pixels extérieurs au contour.

La grandeur de transition a des valeurs plus faibles $G_{min}$ pour les pixels du voisinage se trouvant à l'extérieur de la surface et plus fortes $G_{max}$ pour les pixels du voisinage se trouvant à l'intérieur de la surface. Pour les pixels de la ligne médiane, la grandeur de transition a une valeur intermédiaire $G_0$ comprise entre la plus forte valeur $G_{min}$ et la plus faible valeur de $G_{max}$.

De la sorte si le balayage de la mémoire qui, on le rappelle, correspond, mot mémoire par mot mémoire, aux pixels de l'écran a lieu selon une sécante au contour, il se rencontrera une séquence $G_{min}$ $G_0$ $G_{max}$ si l'on se dirige de l'extérieur du contour vers l'intérieur, c'est-à-dire une séquence de valeurs de G croissantes. La séquence sera décroissante dans le cas contraire c'est-à-dire si l'on se dirige dans l'ordre du balayage de l'intérieur vers l'extérieur de la surface.

Le séquencement des valeurs de la grandeur de transition permet ainsi d'indiquer au processeur de lecture de la mémoire image si l'on entre ou si l'on sort de la surface. On notera également qu'une séquence telle que $G_{min}$ $G_0$ $G_{min}$ serait l'indice d'une ligne de balayage affleurante au contour.

Il sera vu plus loin que dans le mode préféré de réalisation la valeur intermédiaire $G_0$ peut indiquer un coefficient de colorimétrie entre la couleur des pixels internes et celle des pixels externes permettant de réaliser un gradient et ainsi de lisser la surface.

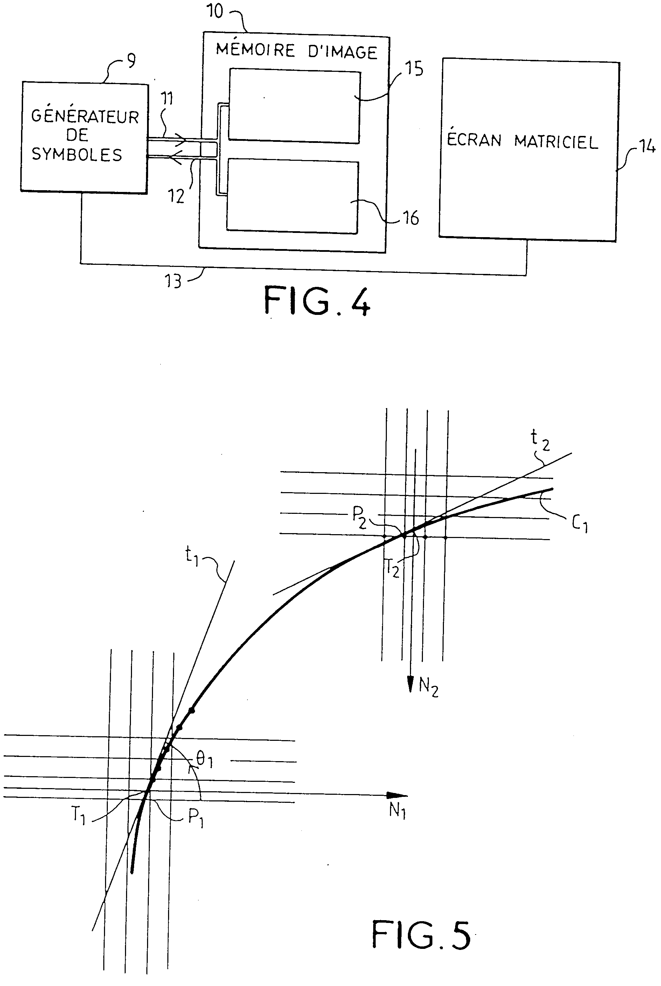

Dans le mode préféré de réalisation qui va être décrit, le procédé selon l'invention est destiné à coder les mots mémoire d'une mémoire image telle que celle représentée figure 4. Le dispositif représenté en figure 4 comporte un générateur de symboles 9. Il s'agit d'un processeur graphique produisant des signaux sous forme numérique pour alimenter une mémoire image 10 au moyen d'une liaison d'écriture 11. Ce même processeur est également utilisé pour lire la mémoire image 10, au moyen d'une liaison mémoire-processeur 12. Les données extraites de cette mémoire sont traitées et complétées dans le processeur qui alimente au moyen d'une liaison 13 un écran matriciel 14. La mémoire 10 comporte deux pages qui sont utilisées de façon alternative connue en soi, pour élaborer le tracé sur l'une tandis que l'autre est utilisée pour rafraîchir l'écran.

Le générateur de symbole 9 produit d'abord un flot de points sous forme des informations numériques suivantes :

- un couple de coordonnées X, Y ;

- un angle θ entre la tangente au tracé et la ligne locale de balayage de l'écran. Dans le cas de la réalisation, le balayage de l'écran est réalisé de façon classique, ligne par ligne, les lignes étant parallèles à l'axe $\vec{X}$.

- une couleur sous forme d'un triplet Rouge Vert Bleu (R.V.B.).

Dans un second temps, le processeur remplace chacun des points $T_i$ de coordonnées $X_i$, $Y_i$ indépendantes de la position des centres des pixels par des points $P_i$ qui se trouvent à l'emplacement d'un centre de pixel.

Pour la détermination des points $P_i$, l'axe parallèle à l'un des axes de coordonnées de l'écran le plus proche angulairement de la tangente au tracé est appelé $\vec{T}$. Ainsi lorsque la tangente au tracé fait avec l'axe horizontal $\vec{X}$ un angle inférieur ou égal à 45°, l'axe $\vec{T}$ est parallèle à l'axe des $\vec{X}$. Il est parallèle à l'axe $\vec{Y}$ dans le cas contraire. De même l'axe $\vec{X}$ ou $\vec{Y}$ le plus proche angulairement de la normale au tracé est appelé $\vec{N}$.

La figure 5 illustre ce qui vient d'être expliqué pour deux points $T_1$ et $T_2$ d'un tracé de contour $C_1$. Pour le point $T_1$, la tangente au tracé fait avec l'horizontal un angle $\theta_1$ supérieur à 45°. Dans ce cas l'axe $N_1$ est un axe parallèle à l'axe horizontal $\vec{X}$. Pour le point $T_2$ c'est l'inverse et la normale $N_2$ est pour $T_2$ parallèle à l'axe vertical $\vec{Y}$. Les centres de pixels se trouvent aux intersections de lignes verticales et horizontales formant un quadrillage. Ce quadrillage n'a été représenté qu'aux voisinages de $T_1$ et $T_2$.

Pour un point quelconque $T_i$, le point $P_i$ correspondant se trouve selon ce mode de réalisation, d'une part sur la ligne des centres de pixels parallèle à l'axe $N_i$ qui est la plus proche du point $T_i$ et sur cette ligne il s'agit du pixel $P_i$ le plus proche de la tangente $t_i$ au point $T_i$. Ainsi pour les points $T_1$ et $T_2$ représentés figure 5, le point extrapolé de $T_1$ est le point $P_1$ qui se trouve d'une part être sur la ligne de pixels parallèle à $N_1$, qui dans ce cas est horizontale, qui est la plus proche de $T_1$. D'autre part, $P_1$ est sur cette ligne le pixel le plus proche de la tangente $t_1$ au point $T_1$ du contour $C_1$. De même, le point extrapolé de $T_2$ est le point $P_2$ qui se trouve d'une part sur la ligne de pixels parallèle à $N_2$, qui dans ce cas est verticale, qui est la plus proche de $T_2$ et sur cette ligne le pixel $P_2$ est le plus proche de la tangente $t_2$ au point $P_2$ du contour $C_1$.

Il a été vu plus haut que selon le mode préféré de réalisation, il était introduit pour les contours de surface et les tracés filaires non superposés à un contour, un coefficient de transition G. La valeur de ce coefficient au pixel de franchissement de contour est une fonction de la position du centre de ce pixel $P_i$ par rapport au point $T_i$ correspondant, en sortie du générateur de symboles.

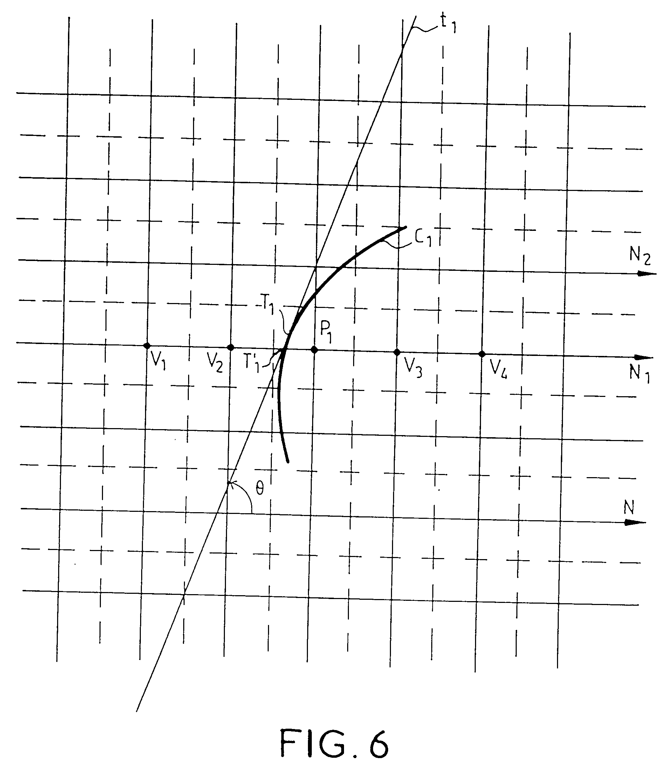

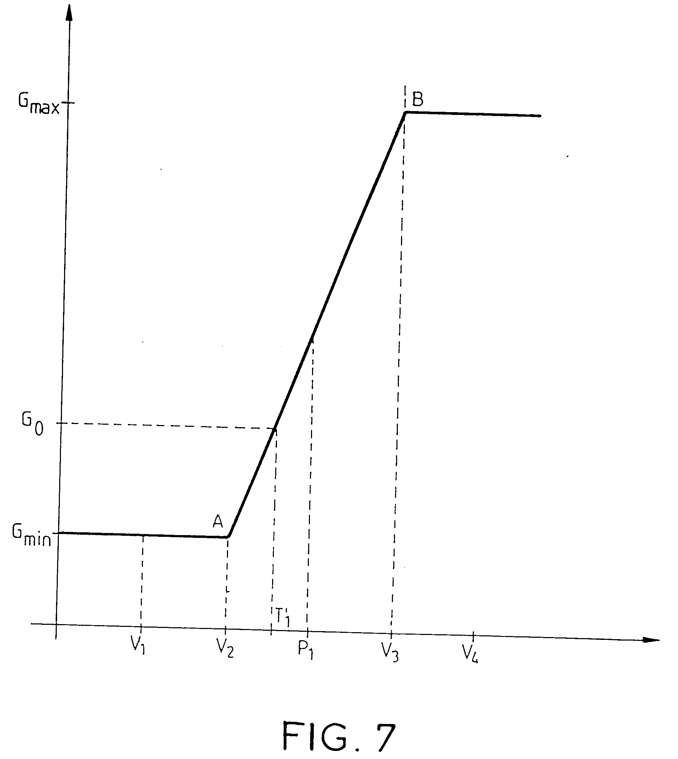

Un exemple de détermination de $G_0$ par rapport aux valeurs $G_{min}$ et $G_{max}$ va être donné en liaison avec les figures 6 et 7.

La figure 6 représente un détail agrandi de la figure 5: celui où apparaissaient les points $T_1$ et son correspondant $P_1$. Sur la figure 6, les centres des pixels de l'écran se trouvent à l'intersection de lignes horizontales et verticales régulièrement espacées. Les surfaces de pixels ont été représentées par leurs contours sous forme d'un carroyage de lignes pointillées. Il a été vu lors de la description de la figure 5 que pour le point $T_1$ et sa tangente $t_1$ la direction $N$ était constituée par des lignes horizontales. Le point $P_1$ est le centre du pixel le plus proche d'un point $T_1'$ qui lui-même est le point d'intersection de la ligne $N$ la plus proche de $T_1$ avec la tangente $t_1$ au point $T_1$ du contour $C_1$. Dans ce mode de réalisation les points situés au voisinage de $P_1$ sont constitués par les points $V_3$, $V_4$ et $V_1$, $V_2$ qui sont sur la ligne $N_1$ du point $P_1$ les plus proches de $P_1$ et de part et d'autre de ce point.

Les points $V_1$, $V_2$ qui se trouvent par exemple à l'extérieur du contour sont affectés de coefficients de transition $G_{min}$ et les points $V_3$, $V_4$ qui se trouvent à l'intérieur sont affectés de coefficients de transition, $G_{max}$. Le point $P_1$ qui se trouve sur le contour est affecté d'un coefficient qui est une valeur intermédiaire entre $G_{min}$ et $G_{max}$.

La figure 7 est un exemple montrant une façon de déterminer la valeur de $G_0$. Elle représente un graphique sur lequel sont portées en ordonnée les valeurs $G_{min}$ et $G_{max}$ en abscisse les espacements des points $V_1$ $V_2$, $T_1'$ $P_1$ $V_3$ $V_4$. Sur le segment $AB$ joignant les points de coordonnées $V_2$, $G_{min}$; $V_3$ $G_{max}$ la valeur de $G_0$ est l'ordonnée du point d'abscisse $T_1'$.

Naturellement, il est possible de choisir une autre courbe pour joindre les points A et B et tenir compte ainsi de la forme réelle du contour. En général on choisit une courbe gaussienne.

Les valeurs de la grandeur de transition associées à chaque point successif du contour sont inscrites progressivement en mémoire image, dans la page affectée à l'élaboration du tracé. Cette page est entièrement initialisée à 0 avant la première écriture. L'écriture successive de ces valeurs peut en fonction de la forme du contour conduire à des superpositions des valeurs G en mémoire image. Il est donc nécessaire d'assurer la cohérence de la génération de ces valeurs et notamment assurer la même valeur finale dans tous les cas. C'est pourquoi pour chaque pixel adressé, la valeur qui sera finalement inscrite en mémoire image tient compte à la fois de la valeur $G_0$ de la grandeur de transition la plus récente ainsi que de la valeur $G_r$ éventuellement inscrite dans une phase antérieure du tracé du contour, cette valeur étant obtenue par une lecture systématique effectuée avant toute écriture, et destinée précisément à détecter une inscription préalable.

Quelques règles simples régissent le calcul de la valeur finale qui sera inscrite en mémoire image. Pour ce calcul, une information supplémentaire est nécessaire. Il s'agit de positionner l'intérieur de la surface par rapport à la courbure du contour. On dira que le contour est concave si le centre de courbure se situe à l'intérieur de la surface et convexe dans le cas contraire. Avec cette terminologie:

Pour un contour concave, la valeur finale inscrite $G_f$ sera la plus petite des deux valeurs $G_0$ et $G_r$.

Pour un contour convexe, ce sera la plus grande de ces valeurs.

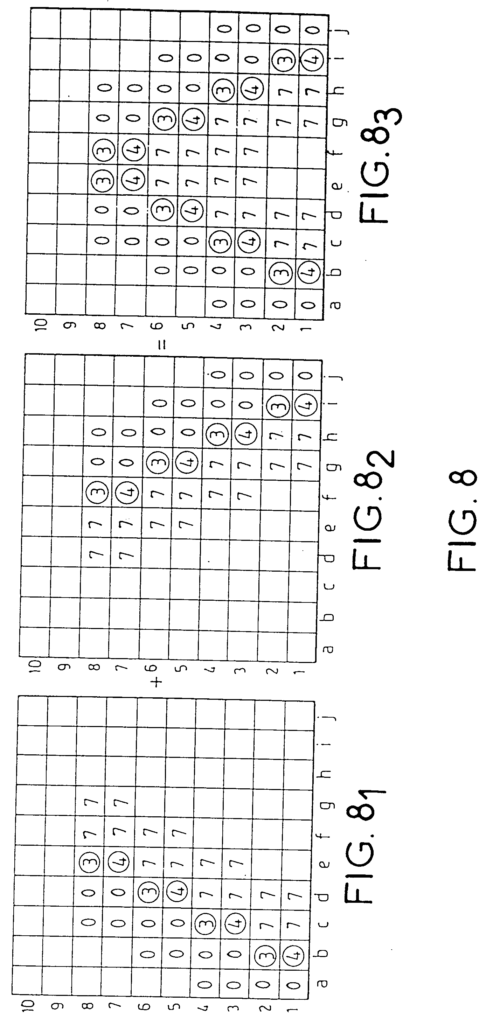

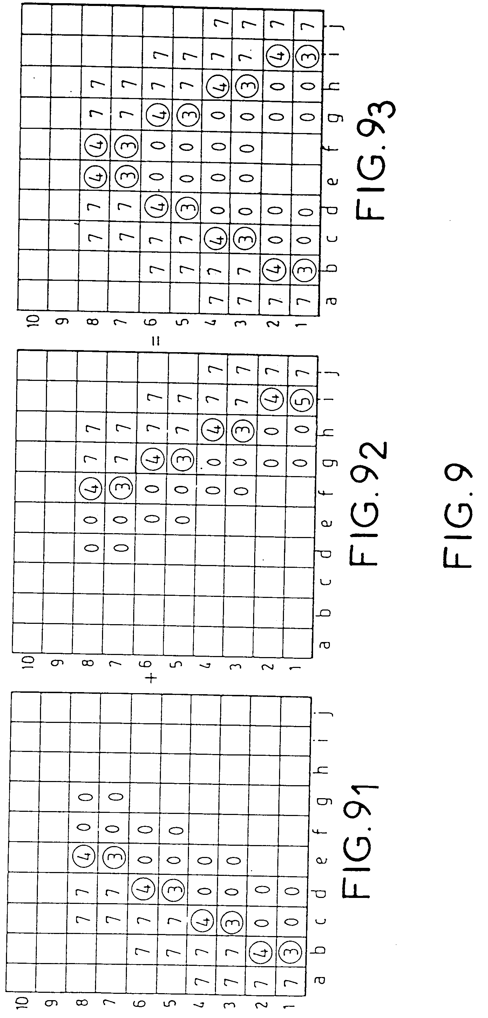

Les figures 8 et 9 illustrent ce qui vient d'être exposé pour deux portions l'une concave (figure 8), l'autre convexe (figure 9).

Ces figures représentent une partie des pixels d'un écran et les valeurs inscrites par exemple sur 3 bits (0 à 7) dans les cellules mémoires correspondantes. Afin de pouvoir désigner l'emplacement de ces cellules, les colonnes ont été repérées de a à j et les lignes de 1 à 10.

Les contours représentés figures 8 et 9 sont identiques. Seule la position de la surface entourée par ce contour diffère. Les figures $8_1$ et $9_1$ situées à gauche des figures 8 et 9 respectivement représentent une première partie du contour. Les figures $8_2$ et $9_2$ situées au centre représentent une seconde partie du contour. Pour chacune de ces parties, la ligne de pixels la plus proche de la normale aux contours est horizontale. Il en résulte que pour chaque pixel appartenant à la ligne médiane du contour, les pixels voisins qui définissent le voisinage du contour sont constitués par quatre pixels de la même ligne deux à droite de la médiane et deux à gauche. Afin de repérer les pixels de la ligne médiane, les valeurs $G_0$ inscrites dans les cases mémoires correspondant à ces pixels ont été cerclés. Si l'on suppose que le tracé du contour a commencé par le tracé représenté figure $8_1$ ou $9_1$ pour se prolonger par le tracé représenté figure $8_2$ ou $9_2$ on voit par exemple que quatre pixels de la ligne 8 (d8 à g8) sont communs aux deux portions de tracé.

Les valeurs déjà inscrites pour les pixels d8 à g8 figurent dans les cellules d8 à g8 de la figure $8_1$ ou $9_1$ Les valeurs qui seraient à inscrire pour la seconde partie du contour représentée figure $8_2$ ou $9_2$ figurent dans ces mêmes cellules d8 à g8 de la figure $8_2$. Lors du tracé de cette seconde partie, la présence d'une écriture préalable dans les cellules d8 à g8 va être détectée par la lecture systématique des cellules appartenant au contour de cette seconde partie de contour. Dans le cas d'un contour concave comme représenté figure 8, la valeur finale $G_f$ sera la plus petite des deux valeurs $G_c$, valeur calculée figurant figure $8_2$ ou $G_r$ valeur relue figurant figure $8_1$.

$$G_f = \min(G_c, G_r) \qquad (1)$$

ce qui conduit au tracé final représenté figure $8_3$ où la cellule d8 par exemple est chargée avec la valeur 0 figurant en figure $8_1$ pour cette case, valeur plus petite que la valeur 7 calculée pour cette même cellule pour la seconde partie du contour.

Dans le cas d'un contour convexe, la valeur finale $G_f$ inscrite est la plus grande des valeurs $G_c$ ou $G_r$ ce qui conduit par exemple pour la cellule d8 à la valeur $G_f = 7$ (figure $9_3$) provenant de la figure $9_1$ valeur supérieure à la valeur 0 qui résulterait de la seconde partie du tracé figurant en d8 figure $9_2$.

Lorsque le contour est alternativement concave puis convexe ou l'inverse le changement de l'information de courbure est réalisé dans la zone où la courbure s'annule.

A la relecture de la mémoire image pour l'affichage à l'écran, la redétection du contour est réalisée de la façon suivante:

- chaque ligne de la mémoire est relue de gauche à droite ;

- l'information de remplissage automatique des surfaces situées à l'intérieur des contours est réinitialisée à l'état inactif pour chaque début de ligne ;

- chaque séquence de type G croissant indique une entrée dans la surface dont le contour est le contour lu. Le remplissage automatique, selon la couleur prévue pour la surface entourée par ce contour, de la partie de la ligne située à droite de cette séquence est déclenché ;

- chaque séquence de type G décroissant indique une sortie de la surface. Le remplissage automatique de la partie de la ligne située à droite de cette séquence est interrompu. Toutes les autres séquences indiquent un effleurement de la surface, sans conséquence sur le remplissage.

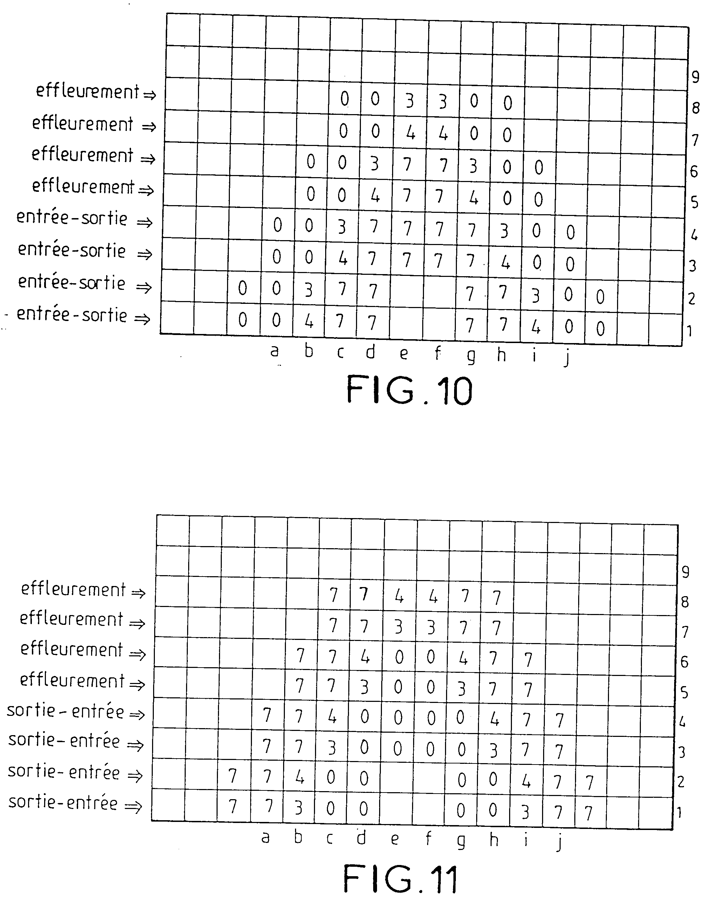

Les figures 10 et 11 font apparaître comment les séquences de valeur de G sont interprétées à la lecture pour le tracé de l'image de l'écran pour les deux cas traités en figure 8 et 9.

Ces figures représentent la même partie d'écran que celles représentées figures $8_3$ et $9_3$. Les cellules ayant même emplacement sont repérées par les mêmes coordonnées. Pour la ligne 8 de la figure 8.3 par exemple, la séquence rencontrée qui est

0 0 3 3 0 0

est interprétée comme

$G_{min}$ $G_{min}$ $G_{max}$ $G_{max}$ $G_{min}$ $G_{min}$

Il s'agit d'un affleurement de contour et non pas d'un franchissement de contour. On rappelle qu'avec les conventions adoptées un franchissement se traduit par une valeur $G_0$ intermédiaire entre deux valeurs une valeur $G_{min}$ d'un côté, une valeur $G_{max}$ de l'autre, la première valeur $G_{min}$ étant précédée ou suivie d'une valeur égale ou plus petite que cette valeur $G_{min}$ et la première valeur $G_{max}$ étant suivie ou précédée d'une valeur $G_{max}$ égale ou supérieure à la première. Une entrée dans une surface se présente sous la forme :

$G_{min}$ $G_{min}$ $G_0$ $G_{max}$ $G_{max}$

et une sortie sous la forme :

$G_{max}$ $G_{max}$ $G_0$ $G_{min}$ $G_{min}$

La grandeur G va donc en croissant de l'extérieur d'un contour ou d'un tracé filaire vers l'intérieur et en décroissant dans le cas contraire la croissance ou la décroissance pouvant être nulle pour les groupes de valeurs précédant ou suivant la valeur intermédiaire affectée au pixel de franchissement de contour. Sur les figures 8 à 10, les valeurs de G pour les pixels voisins du pixel de franchissement de contour sont à 0 ou 7. Il s'agit d'un cas particulier, la transition pourrait aussi être plus progressive avec des valeurs croissantes ou décroissantes de façon monotone. Les autres lignes des figures 10 et 11 ne seront pas davantage commentées. Le résultat de l'interprétation des séquences de valeurs de la grandeur G est indiqué en tête de chaque ligne.

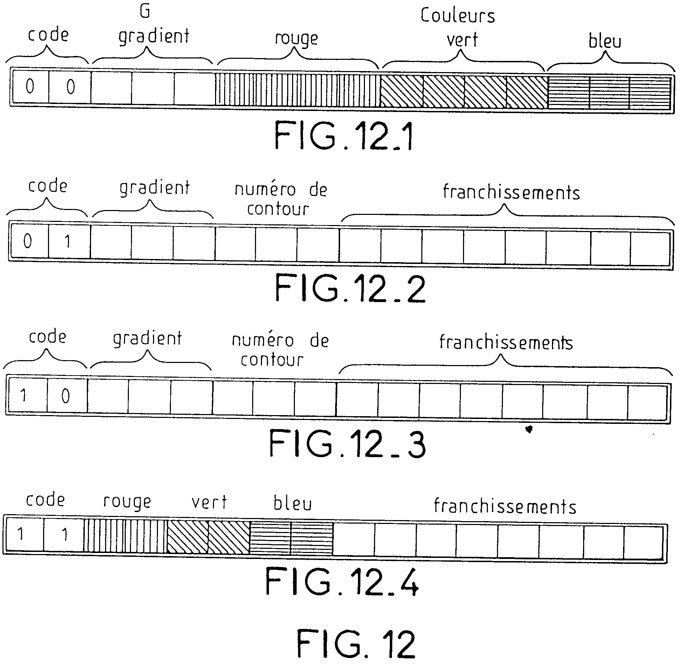

Un exemple de codage selon le mode particulier de réalisation de l'invention sera maintenant décrit en référence à la figure 12.

Dans le cas de la génération numérique de symboles en couleurs, il a été trouvé qu'un bon compromis coût-performances pourrait être obtenu en utilisant seize bits par pixel en mémoire image. Il est préférable, en règle générale d'utiliser un nombre de bits multiple de 8 pour des raisons de standardisation de composants.

Avec seize bits, en utilisant l'invention, onze bits sont disponibles pour inscrire la couleur des tracés filaires sur les parties d'écran où le tracé filaire est seul présent.

Le code en résultant est représenté figure $12_1$. Il comporte les deux bits d'identification, ces deux bits ayant la combinaison de valeur 00. Trois bits sont réservés à l'inscription de la valeur de transition G et onze à l'indication de la colorimétrie à raison de quatre bits pour le rouge et le vert et 3 bits pour le bleu.

Pour les points de l'écran où le tracé filaire entre en intersection avec un contour précédemment tracé le processus est plus complexe. La relecture de la mémoire image avant écriture permet la détection de ce type de configuration.

Dans ce cas, avant toute écriture, il est nécessaire de compresser localement l'information relative au contour ou au tracé filaire détecté sous le tracé filaire en cours. Cette compression est réalisée sur les deux pixels situés à droite et à gauche du pixel en cours d'écriture. Ces pixels sont relus afin de détecter et restituer une éventuelle information de traversée de contour. Le mécanisme de détection utilise, comme il a été vu plus haut, les séquences de valeur de G où la lecture des informations de franchissement de contour sur des bits dédiés comme cela a été expliqué plus haut et comme cela sera expliqué également à nouveau plus bas pour cet exemple de réalisation. Le code d'identification 10 (figure 12-3) est alors affecté à ces pixels pour indiquer que l'information de traversée de contour a déjà été extraite et le bit de franchissement est activé pour le pixel pour lequel une information de franchissement est éventuellement détecté. Donc, en règle générale pour un tracé filaire, le code 00 est utilisé. Dans le cas particulier où le franchissement d'un contour est détecté précisément sur le pixel du tracé filaire en cours, la combinaison 11 (figure 12-4) des bits d'identification permet de mémoriser cette information de traversée de contour au détriment d'une perte de précision sur la couleur du tracé. Il convient de noter que cette dégradation reste extrêmement locale et sans répercussion sur la qualité de l'image globale.

Le code d'identification 01 figure 12-2 est affecté aux pixels d'un contour qui ne sont pas communs ou voisins de pixels appartenant également à un autre contour précédemment tracé. Le code comprend outre les deux bits d'identification, à la valeur 01 trois bits affectés à la grandeur G de transition, trois bits pour identifier le numéro du contour en cours. C'est ce numéro de contour qui permettra au processeur graphique de lecture de rechercher le code de couleur affecté à ce contour. Les huit bits restants sont les bits de franchissement du contour. Ce nombre est égal à $2^3$. Il est égal au nombre de combinaisons que l'on peut réaliser sur les bits identifiant le numéro de contour. Il est évidemment préférable que le nombre de bits de franchissement soit égal à $2^n$, n représentant le nombre de bits affectés à l'identification du numéro de contour, car on a alors comme dans le cas de 16 bits une utilisation optimum de tous les bits. On observera cependant que d'autres configurations pourraient être envisagées. Ainsi si le code entier était établi sur 24 bits avec deux bits d'identification de cas, trois bits pour la grandeur G et quatre bits pour le numéro de contour, il reste 15 bits pour les bits de franchissement de contour, soit $2^4$ à un près, on a une bonne utilisation de l'ensemble des bits dans ce cas. Par contre, dans le cas 00 avec deux bits d'identification 3 bits pour la grandeur G, il reste 19 bits pour la couleur ce qui est en général surabondant. C'est pourquoi dans ce mode préféré de réalisation on travaille sur 16 bits ce qui permet de traiter dans de bonnes conditions huit contours. Au cas où l'image comporte davantage de contours le code sur 16 bits est encore utilisable s'il est possible de diviser l'image en bandes parallèles aux lignes de balayage par exemple horizontales, chaque bande ne comportant au maximum que huit contours. Un simple comptage des lignes permet alors au processeur graphique de traiter chaque bande comme une image entière.

Le code 10 (figure 12-3) est identique au code 01, mais ce code indique que les pixels affectés de ce code ont déjà été relus et les bits de franchissement, éventuellement marqués pour les contours ayant précédé la portion de tracé en cours. On ne doit pas les relire puisque la cohérence de l'information a pu être détruite au cours des recodages précédents .

Enfin le code 11 (figure 124) est utilisé pour les tracés filaires se situant en intersection avec un contour. Huit bits sont les bits de franchissement, la couleur est comprimée sur six bits deux pour le rouge, deux pour le vert et deux pour le bleu.

## Revendications

1. Procédé de codage des mots d'une mémoire image destinée à être lue périodiquement pour rafraîchir une image formée sur un écran par un ensemble de pixels, l'image comportant, se détachant d'un fond d'image des surfaces $S_1$ .... $S_2$ ....$S_p$ chacune de ces surfaces ayant une couleur uniforme et étant délimitée par un contour $C_1$ .... $C_2$ ....$C_p$, chaque contour comportant une ligne médiane joignant les pixels situés en limite d'au moins deux surfaces ou d'une surface et du fond, et un voisinage de la ligne médiane comportant de part et d'autre de la ligne médiane au moins les pixels immédiatement voisins d'un pixel de la ligne médiane, l'image comportant en outre des tracés filaires, un pixel de l'écran étant en correspondance univoque avec une cellule mémoire pouvant contenir un mot et la lecture de la cellule en cours constituant une partie au moins de l'information nécessaire à l'écriture du pixel correspondant sur l'écran, procédé dans lequel la mémoire image est effacée après chaque lecture et dans lequel un ordre de priorité est attribué aux contours d'une part et aux tracés filaires d'autre part, les contours étant recodés d'abord, puis les tracés filaires et pour chacune de ces natures de tracés par ordre prioritaire croissant, les plus prioritaires étant recodés en derniers, procédé caractérisé en ce que les mots mémoires recodés relativement aux contours comprennent non seulement les mots mémoires relatifs aux lignes médianes des contours mais aussi les mots mémoires relatifs au voisinage de chaque contour et en ce que le code de chaque mot mémoire recodé comporte deux bits d'information sur les circonstances d'écriture des bits recodés ces deux bits permettant d'identifier par les combinaisons de leurs différentes valeurs possibles quatre cas;

le premier cas repéré par une première combinaison de valeurs des deux bits identifie un tracé filaire qui pour le pixel représenté n'est pas sur le tracé d'un contour précédemment écrit.

le second cas repéré par une seconde combinaison de la valeur des deux bits identifie un tracé de contour qui pour le pixel représenté n'est pas sur le tracé d'un autre contour.

le troisième cas repéré par une troisième combinaison de la valeur des deux bits identifie un tracé de contour qui pour le pixel représenté se trouve au voisinage d'un contour précédent.

le quatrième cas repéré par une quatrième combinaison de la valeur des deux bits identifie un tracé filaire qui pour le pixel représenté est commun à un contour précédemment tracé.

2. Procédé selon la revendication 1 pour un écran dont les pixels sont situés en lignes et en colonnes, un balayage pour le tracé de l'écran étant effectué ligne à ligne, caractérisé en ce que les pixels du voisinage sont constitués par un nombre constant de pixels situés sur une ligne ou une colonne de pixels comprenant le pixel de la ligne médiane du contour, les pixels du voisinage étant sur une ligne lorsque la normale au tracé au niveau du pixel de la ligne médiane est angulairement plus proche de la direction définie par les colonnes et sur une colonne dans le contraire, les nombres de pixels du voisinage étant égaux de part et d'autre de la ligne médiane.

3. Procédé selon la revendication 1 dans lequel le code de chaque mot mémoire recodé comporte pour les trois premiers cas un groupe de bits destinés à l'inscription d'une grandeur G représentant un rapport entre la valeur de couleur de l'intérieur du contour ou du tracé filaire et la valeur de couleur située à l'extérieur.

4. Procédé selon la revendication 2 dans lequel le code de chaque mot mémoire recodé comporte pour les trois premiers cas un groupe de bits destinés à l'inscription d'une grandeur G, la valeur de cette grandeur G allant en croissant dans le sens du balayage de l'extérieur du contour ou du tracé filaire vers l'intérieur et allant en décroissant dans le cas contraire.

5. Procédé selon la revendication 4 dans lequel la grandeur G représente un rapport entre la valeur de couleur à l'intérieur du contour ou du tracé filaire et la valeur de couleur située à l'extérieur.

6. Procédé selon l'une des revendications 1 à 5 caractérisé en ce que pour les second, troisième et quatrième cas, un groupe de bits comportant un nombre de bits égal au nombre de contours envisagé pour l'image de l'écran est réservé à une inscription d'un franchissement de contour, ce franchissement étant repéré par la valeur affectée à un bit du groupe chaque bit du groupe étant lui-même en correspondance biunivoque avec l'un des contours.

7. Procédé selon l'une des revendications 1 à 6 caractérisé en ce que pour les second et troisième cas, un groupe de bits est destiné à l'inscription d'un numéro de contour.

8. Procédé selon la revendication 6 caractérisé en ce que pour les deuxième et troisième cas, le nombre des bits dédiés à une inscription de franchissement de contour est égal à $2^n$, n désignant le nombre de bits destinés à l'inscription d'un numéro de contour.

9. Procédé selon l'une des revendications 3 à 6 caractérisé en ce que pour le premier cas, le code ne comporte outre les deux bits d'identification de cas et le groupe de bits indiquant la valeur de la grandeur G qu'un seul autre groupe de bits indiquant une valeur de couleur.

10. Procédé selon l'une des revendications 1 ou 6 caractérisé en ce que pour le quatrième cas, le code ne comporte outre les deux bits d'identification de cas et le groupe de bits de franchissement de contour qu'un seul autre groupe de bits indiquant une valeur de couleur.

FIG.1

FIG.2

FIG.3

FIG.4

FIG.5

FIG. 6

FIG. 7

FIG. 8₁

+ FIG. 8₂

= FIG. 8₃

FIG. 8

EP 0 697 678 A1

FIG.9$_1$

FIG.9$_2$

FIG.9$_3$

FIG.9

| | a | b | c | d | e | f | g | h | i | j | |
|---|---|---|---|---|---|---|---|---|---|---|---|
| effleurement ⇒ | | | 0 | 0 | 3 | 3 | 0 | 0 | | | 9 / 8 |
| effleurement ⇒ | | | 0 | 0 | 4 | 4 | 0 | 0 | | | 7 |
| effleurement ⇒ | | 0 | 0 | 3 | 7 | 7 | 3 | 0 | 0 | | 6 |
| effleurement ⇒ | | 0 | 0 | 4 | 7 | 7 | 4 | 0 | 0 | | 5 |
| entrée-sortie ⇒ | 0 | 0 | 3 | 7 | 7 | 7 | 7 | 3 | 0 | 0 | 4 |
| entrée-sortie ⇒ | 0 | 0 | 4 | 7 | 7 | 7 | 7 . | 4 | 0 | 0 | 3 |
| entrée-sortie ⇒ | 0 | 0 | 3 | 7 | 7 | | 7 . | 7 | 3 | 0 | 0 / 2 |
| entrée-sortie ⇒ | 0 | 0 | 4 | 7 | 7 | | 7 | 7 | 4 | 0 | 0 / 1 |

## FIG.10

| | a | b | c | d | e | f | g | h | i | j | |
|---|---|---|---|---|---|---|---|---|---|---|---|
| effleurement ⇒ | | | 7 | 7 | 4 | 4 | 7 | 7 | | | 9 / 8 |
| effleurement ⇒ | | | 7 | 7 | 3 | 3 | 7 | 7 | | | 7 |
| effleurement ⇒ | | 7 | 7 | 4 | 0 | 0 | 4 | 7 | 7 | | 6 |
| effleurement ⇒ | | 7 | 7 | 3 | 0 | 0 | 3 | 7 | 7 | | 5 |
| sortie-entrée ⇒ | 7 | 7 | 4 | 0 | 0 | 0 | 0 | 4 | 7 | 7 | 4 |
| sortie-entrée ⇒ | 7 | 7 | 3 | 0 | 0 | 0 | 0 | 3 | 7 | 7 | 3 |
| sortie-entrée ⇒ | 7 | 7 | 4 | 0 | 0 | | 0 | 0 | 4 | 7 | 7 / 2 |
| sortie-entrée ⇒ | 7 | 7 | 3 | 0 | 0 | | 0 | 0 | 3 | 7 | 7 / 1 |

## FIG.11

EP 0 697 678 A1

code | G gradient | rouge | Couleurs vert | bleu

0 | 0

## FIG.12.1

code | gradient | numéro de contour | franchissements

0 | 1

## FIG.12.2

code | gradient | numéro de contour | franchissements

1 | 0

## FIG.12_3

code | rouge | vert | bleu | franchissements

1 | 1

## FIG.12.4

## FIG. 12

EP 0 697 678 A1

**Office européen des brevets**

**RAPPORT DE RECHERCHE EUROPEENNE**

Numero de la demande

EP 95 40 1803

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | IBM JOURNAL OF RESEARCH AND DEVELOPMENT, NOV. 1982, USA, VOL. 26, NR. 6, PAGE(S) 698 - 707, ISSN 0018-8646, DANIELSSON P -E 'An improved segmentation and coding algorithm for binary and nonbinary images' | 1 | G06T11/40 |
| A | * page 699, colonne de gauche, alinéa 2 * <br> * page 700, colonne de droite, alinéa 3 * <br> * page 703, colonne de droite, alinéa 4 - alinéa 8 * <br> --- | 2-10 | |
| A | US-A-4 897 805 (WANG JANE) 30 Janvier 1990 <br> * le document en entier * <br> --- | 1-10 | |
| A | EP-A-0 073 338 (IBM) 9 Mars 1983 <br> --- | | |
| A | SIGGRAPH'81. EIGHTH ANNUAL CONFERENCE ON COMPUTER GRAPHICS AND INTERACTIVE TECHNIQUES, DALLAS, TX, USA, 3-7 AUG. 1981, ISSN 0097-8930, COMPUTER GRAPHICS, AUG. 1981, USA, PAGE(S) 29 - 36, PAVLIDIS T 'Contour filling in raster graphics' <br> ----- | | DOMAINES TECHNIQUES RECHERCHES (Int.Cl.6) <br><br> G06T <br> G09G |

Le présent rapport a été établi pour toutes les revendications

| Lieu de la recherche | Date d'achèvement de la recherche | Examinateur |
|---|---|---|
| LA HAYE | 12 Septembre 1995 | Pierfederici, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                            
& : membre de la même famille, document correspondant

EPO FORM 1503 03.82 (P04C02)